# EUROPEAN PATENT SPECIFICATION

(11) **EP 2 427 018 B1**
(45) Date of publication and mention of the grant of the patent: **17.02.2016**
(21) Application number: 10290478.6
(22) Date of filing: 07.09.2010
(51) Int. Cl.: H04W 74/00, H04W 74/08

(54) **Access to a wireless communications network by a transceiver equipment selecting a non-zero timing advance value used for sending a Random Access Channel preamble to a LTE base station**
Zugriff auf ein drahtloses Kommunikationsnetzwerk mit einem Sende-/Empfängergerät durch Auswahl eines nicht-Null-Wertes der Steuerzeitvorrückung TA für die Sendung einer Zufallszugriffskanal-Präambel an eine LTE Basisstation
Accès à un réseau de communications sans fil par un équipement émetteur-récepteur sélectant une valeur non nulle d'avance de la synchronisation, qui est utilisée pour l'émission d'un préambule de canal à accès aléatoire vers une station de base LTE

(43) Date of publication of application: 07.03.2012
(73) Proprietor: ALCATEL LUCENT, 92100 Boulogne-Billancourt (FR)
(72) Inventor: Doetsch, Uwe, 74392 Freudental (DE); Ohm, Michael, 70372 Stuttgart (DE)
(74) Representative: Wetzel, Emmanuelle

(56) References cited:
- WO-A1-01/11907
- WO-A1-2007/117186
- WO-A1-2008/115247
- US-A1- 2005 030 919
- LGE: "RACH Sequence Design Based on Repetition Method", INTERNET CITATION, 13 October 2006 (2006-10-13), XP002466660, Retrieved from the Internet: URL:3GPP TSG RAN WG1 Meeting http://www.3gpp.org/ftp/Specs/html-info/TD ocExMtg-R1-46b--25946.htm [retrieved on 2008-01-23]

## Description

### BACKGROUND OF THE INVENTION

The present invention relates to the field of telecommunication, and more specifically to a method for performing a random access procedure by a transceiver equipment in a wireless communications network.

In most wireless or mobile radio communications networks as GSM, UMTS, WIMAX or LTE, a random access channel (RACH) is foreseen. The RACH is a contention-based channel for initial uplink transmission. When a transceiver equipment, so far not connected to the network, likes to start transmitting data towards the network, it first needs to access successfully the RACH channel. Contention resolution is the main goal of the access to the RACH since it may happen quite often that several transceiver equipments like to access the network simultaneously or quasi-simultaneously leading to collisions. Once it is ensured that no collisions occurred, resources can be allocated to the transceiver equipment for future transmissions.

In addition to the access to the network, the RACH channel may have other functions as resource requests, transport of control information, time offset adjustment of the uplink transmission or transmitted power adjustment.

In Long Term Evolution (LTE) or LTE-Advanced networks based on OFDM modulation, both time and frequency synchronizations between the transceiver equipments and the base station need to be achieved.

Especially, the random access procedure is used for obtaining fine uplink time synchronization between the base station and the transceiver equipment. Especially, a timing advance value can be communicated from the base station to the transceiver equipment. Using the timing advance value at the transceiver equipment compensates for a propagation delay of signals sent by the transceiver to the base station in the cell.

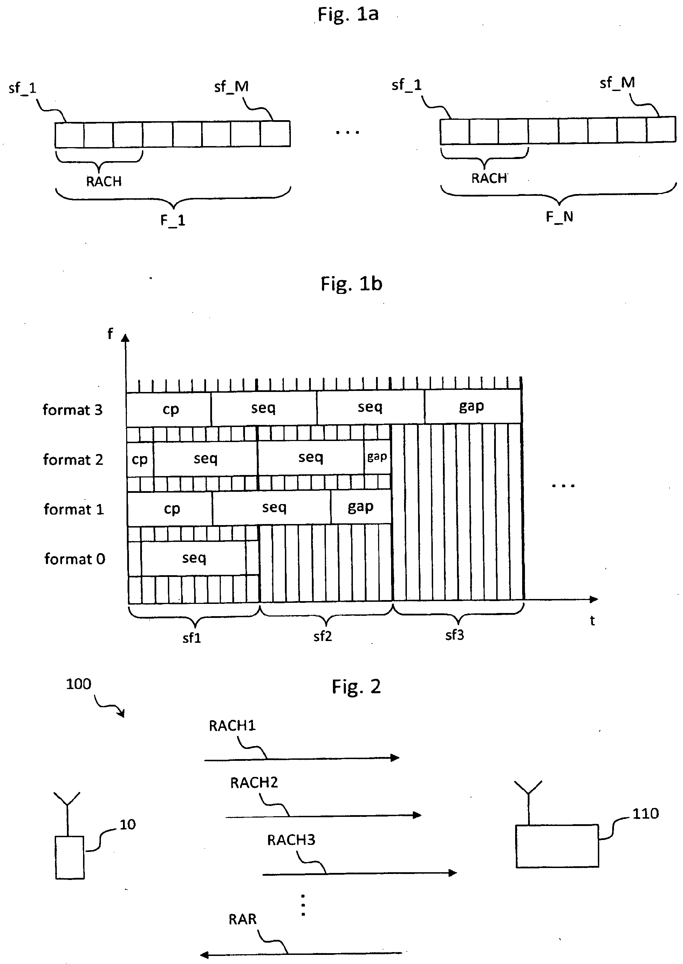

Figure 1a shows a frame structure as defined in a radio communication network. Frames F_1, F_N are composed of subframes sf_1, .., sf_M. A part of the subframes, e.g. three subframes, are used by the base station for searching for new transceivers accessing the RACH, cf. the first three subframes of the Frames F_1, F_N depicted by Figure 1a. For example, in LTE, each 10 ms the base station is searching for new RACH access during either 1, 2 or 3 ms being herein called the RACH window.

In LTE standardization, four different RACH formats as shown on figure 1b have been defined for FDD operation, and an additional one for TDD operation. For simplicity we restrict ourselves to the FDD case in the following description, as the TDD case is very similar. The RACH format definitions are to be found in Technical Specification 3GPP TS 36.211. All four RACH formats comprise a cyclic prefix cp, one or two sequences seq and are followed by a gap. A subframe time structure is also indicated by Figure 1b, cf. the reference numerals sf1, sf2, sf3 denoting respective time intervals corresponding to single subframes each.

The cyclic prefix cp is used to avoid the effect of interference caused by multipath propagation. The sequence seq is used to identify each random access attempt. The sequence is usually selected randomly by the transceiver equipment among a predefined number of possibilities, for example 64. The transceiver equipment detects that the RACH procedure has been successful when it gets an answer from the base station comprising the same sequence(s) it initially used in the RACH preamble it sent. In some cases, two concatenated sequences are used to better cope with high interference situations.

A gap or guard interval is used in order to avoid interference with the next following sub-frame sf2, sf3. The duration of the gap depends on the cell size and corresponds to the maximum round trip delay in the cell. A large cell size implies a long round trip delay between the downlink signal and the uplink transmission.

For example, LTE foresees that RACH format 0 is adapted for a cell radius of 15 km and a 1 ms long RACH preamble is used, while the LTE standard allows that RACH format 3 is used for a large cell radius of up to 100 km. The RACH format 3 extends on 3 ms duration over 3 OFDM subframes.

A base station is configured to use one of the predefined RACH formats usually depending on its cell size. The RACH format to be used is part of the system information parameters broadcast by the base station in the downlink and received by the user equipments. The user equipments adapt the RACH format they use to the RACH format broadcast from the base station.

Consequently, during the duration of the RACH window no uplink traffic can be received by the base station on the transmission resources reserved for the RACH. The length of the RACH window influences the throughput of the network.

This presents the disadvantage that a part of the cell capacity is wasted by using large RACH messages in large cells with low user density but high capacity demand due to the long RACH format.

Moreover, the LTE standard limits the cell radius to 100 km, because a maximum timing advance value allowed by the LTE standard corresponds to a cell radius of 100 km. Thus, conventional LTE systems cannot provide radio cells with a radius of more than 100 km.

A particular object of the present invention is to provide a solution enabling an efficient RACH procedure in cases of large cells, which may even exceed the standardized limit of 100 km for the cell radius.

Another object of the invention is to provide a customer premises equipment (CPE) adapted to support an optimized RACH procedure in case of large cells especially with low user density.

US 2005/00390319 A1 discloses a method of accessing resources of a radio communication system, a terminal and base station for the implementation of the method in the context of the UMTS system.

WO 2008/115247 A1 discloses a configurable random access channel structure for range extension in a wireless communication system.

WO 01/11907 A1 discloses an apparatus and methods for extended base station range using staggered uplink frame structures.

### SUMMARY OF THE INVENTION

These objects presented above, and others that appear below, are achieved in particular by a method for accessing a wireless communications network according to claim 1, and a transceiver equipment according to claim 9.

Regarding the method for accessing a wireless communications network by a transceiver equipment, the object of the,present invention is achieved by said transceiver equipment sending a Random Access Channel, RACH, preamble over a Random Access Channel to a base station, said method further comprising the steps of: Sending from said transceiver equipment to said base station an initial RACH preamble using an initial timing advance value, wherein said initial RACH preamble comprises a first sequence; determining if a successful response to said initial RACH preamble is received by the transceiver equipment from the base station within a predetermined waiting interval, if no successful response to said initial RACH preamble is received by the transceiver equipment from the base station within a predetermined waiting interval, sending from said transceiver equipment to said base station at least one further RACH preamble using a further timing advance value, wherein said further RACH preamble comprises a further sequence, until a successful response to one of said further RACH preambles is received by the transceiver equipment from the base station, wherein said further timing advance value is different from said initial timing advance value.

According to the present invention, the method foresees that if a RACH preamble sent by the transceiver equipment with an initial timing advance does not get a successful answer, a second RACH preamble is sent with a second timing advance, said second timing advance being different from the initial timing advance.

Generally, the selection of timing advance values according to the embodiments advantageously enables to increase the chances for a successful RACH procedure. In contrast, e.g. systems adhering to LTE standard require the transceiver equipment to use an initial timing advance value of zero for the initial RACH preamble. This severely reduces the chances for an efficient RACH procedure, since due to different distances between the transceiver equipment (e.g., mobile terminal) and the base station, nonvanishing timing advance values yield better chances for the initial RACH preamble to coincide with the RACH window at the base station.

Moreover, for particularly large cell radii e.g. exceeding the LTE standard-specified limit of 100 km (kilometers), the standard initial RACH preamble requiring an initial timing advance value of zero will not yield good results, either. I.e., the inventive selection of different timing advance values during the RACH procedure will also increase the chances for efficient RACH access with extremely large non-standard cell sizes.

According to a preferred embodiment, said initial timing advance value of said initial RACH preamble and/or a further timing advance value of at least one further RACH preamble is determined independently of a search window duration of a search window used by said base station for detecting said RACH preamble, which advantageously reduces a processing effort on the terminal side.

According to a further preferred embodiment, said initial timing advance value of said initial RACH preamble and/or a further timing advance value of at least one further RACH preamble is selected from a predetermined range of possible timing advance values to be used by said transceiver equipment. These possible timing advance values may e.g. be determined once and stored to the transceiver equipment. Preferably, said range comprises timing advance values that correspond with a cell radius of more than 100 km of a radio cell being served by said base station, preferably more than 150 km, thus advantageously enabling the transceiver equipment to initially use such timing advance values for the RACH procedure which have a high probability of succeeding for random access in situations with very large cells.

Timing advance values corresponding with such cell radii that exceed the LTE standard definition may comprise a range of up to 1333 µs (corresponding to a cell radius of about 400 km) or even more. I.e., not only does the inventive solution enable the transceiver equipment to start a RACH procedure with nonzero timing advance values, which per se yields the advantages listed above. It rather also enables the transceiver equipment to employ "exceedingly" large timing advance values thus deliberately violating the LTE standard with regard to transceiver equipment as per now, which enables to adapt the RACH procedure to large radio cells. A further improvement of the inventive principle over prior art is based on the fact that the above advantages regarding an efficient RACH procedure and the compatibility with excessively large cells (cell radius larger than 100 km) can be achieved without any modifications to the base station. I.e., a conventional base station may successfully be accessed during RACH process using the inventive embodiments as explained above. Particularly, the RACH procedure according to the present invention does not necessarily require to take into consideration the RACH preamble format currently used by said base station, which is also broadcast to the terminals. However, according to further embodiments, this information may also be employed by the transceiver equipment (terminal) to fine-tune the determination of timing advance values for the further RACH preambles.

According to a further embodiment, said transceiver equipment receives from said base station cell radius information that characterizes at least one of: an actual cell radius, a possible maximum cell radius; and wherein said transceiver equipment selects said initial timing advance value of said initial RACH preamble and/or a further timing advance value of at least one further RACH preamble depending on said cell radius information, which enables a more precise determination of suitable timing advance values.

According to a further embodiment, said transceiver equipment chooses a transmit power level for sending said RACH preambles depending on timing advance values associated with (i.e. chosen for) said RACH preambles thus considering a correlation between the timing advance and a distance to the base station.

According to a further particularly preferred embodiment, said method is adapted to be used for air-to-ground communications wherein said transceiver equipment is an onboard unit on board of an air plane and said base station is a ground unit.

For instance, the inventive principle may advantageously be employed to provide an LTE-based DA2G (direct air-to-ground) network with cells dedicated to serving sea or other areas in which propagation distances larger than 100 km occur, comprised of standard LTE eNodeB equipment and standard LTE onboard units (OBU) but with the modified random access method and/or the modified timing advance method according to the embodiments. Preferably, the transceiver equipment and/or the base stations may further be equipped with high-gain directive antennas to further support the large cell radii.

Preferably, each air plane comprises one on-board unit (OBU) further ensuring a gateway function with a plurality of user terminals on board of the plane. The communication between the OBU and the user terminals may be based on WIFI or on any other wireless or wired standards. In this type of application, the present invention presents the advantage that the OBUs do not need a GPS system for evaluating their position and consequently their distance to the base stations constituting the network for deriving the proper timing advance value.

According to a further embodiment, said transceiver equipment simultaneously sends a plurality of initial RACH preambles to said base station, preferably within one frame or one subframe, wherein each of said plurality of initial RACH preambles is associated with a different sequence and a different initial timing advance value, which enables a very efficient random access procedure since only a minimum amount of time and frequency resources are required for probing different timing advance values in the context of an initial RACH preamble.

Further advantageous features of the invention are defined in the dependent claims.

### BRIEF DESCRIPTION OF THE DRAWINGS

Other characteristics und advantages of the invention will appear on reading the following detailed description of some preferred embodiments given by way of non-limiting illustrations, and from the accompanying drawings, in which:
- Figure 1a: shows a frame structure used for supporting the RACH procedure;
- Figure 1b: shows different RACH preamble formats as defined in LTE Standard;
- Figure 2: shows a block diagram of a wireless communications network being accessed by a transceiver equipment according to an embodiment;
- Figure 3a: shows the reception of RACH preamble at a base station according to prior art;
- Figure 3b: shows the reception of RACH preamble at a base station according to an embodiment;
- Figure 4: shows a flow-chart of an access method according to an embodiment;
- Figure 5: shows an application of an embodiment of the present invention to air to ground communication; and
- Figure 6: shows an implementation of a transceiver equipment according to an embodiment.

### DETAILED DESCRIPTION OF THE INVENTION

Figure 1a and Figure 1b have already been described in connection with the background of the invention. In the following, the description will be made in the context of FDD operation. It will be understood by those skilled in the art that this is not a mandatory requirement of the present invention and that a similar approach can be used for TDD operation without departing from the scope of the present invention.

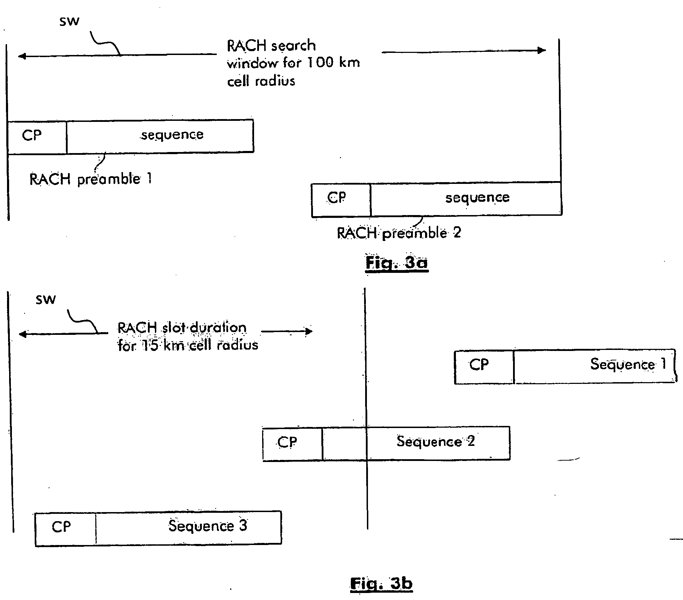

Figure 3a shows the reception of RACH preamble of a base station according to prior art. This configuration shows a RACH search window sw at a base station for 100 km cell radius. According to the LTE standard, for this cell size the RACH preamble should be 3 ms long.

A first RACH preamble 1 is received at the beginning of the RACH search window sw and corresponds to a RACH preamble sent by a transceiver equipment located next to the base station and which has a small round trip delay toward the base station. A second RACH preamble 2 is received at the end of the RACH search window sw and corresponds to a RACH preamble sent by a transceiver equipment located at the cell edge and which requires a larger round trip delay toward the base station. In prior art, the RACH search window is configured to take the cell size into account. This implies that RACH preambles sent simultaneously by different transceivers regardless of their position in the cell will be detected in the same search window at the base station.

Figure 2 shows a block diagram of a wireless communications network 100 being accessed by a transceiver equipment 10, e.g. a mobile terminal, according to an embodiment of the present invention. The network 100 may have a plurality of base stations one of which is denoted by reference sign 110 in Figure 2.

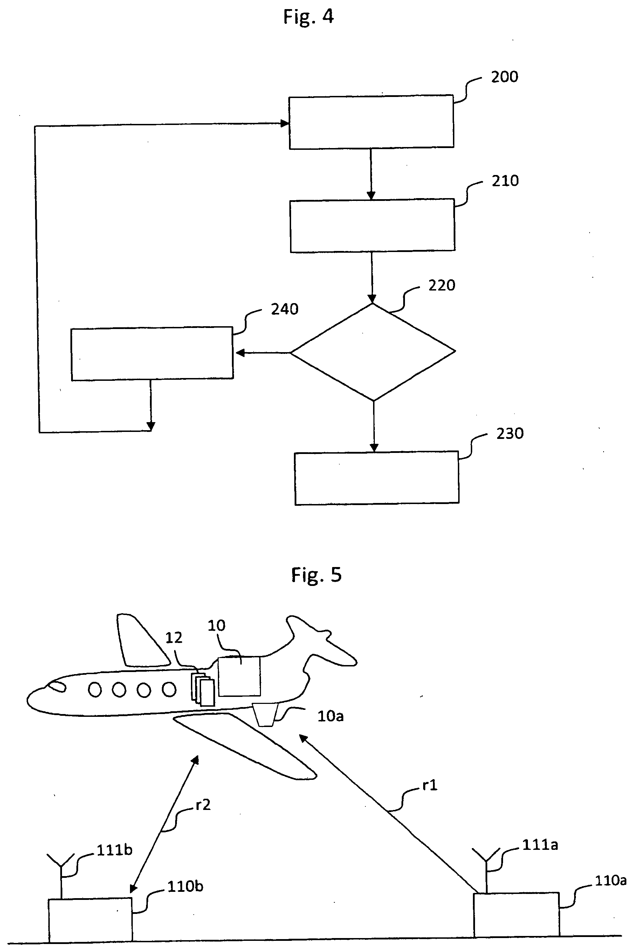

For accessing the wireless communications network 100, said transceiver equipment 10 first sends an initial RACH preamble RACH1 to the base station 110, also cf. the block 200 of the flow-chart depicted by Figure 4. For sending said initial RACH preamble RACH1, an initial timing advance value is used, which may be zero, but which is chosen to some other nonzero value. Said initial RACH preamble RACH1 also comprises a first sequence that is used to identify the present random access attempt associated with RACH preamble RACH1.

After said step 200 of sending said initial RACH preamble RACH1, said terminal 10 (Figure 2) may wait for a response from the base station 110 for a predetermined waiting interval, cf. step 210 of Figure 4.

Subsequently, in step 220, the terminal 10 determines if a successful response RAR to said initial RACH preamble RACH1 is or has been received by the terminal 10 from the base station 110 within said predetermined waiting interval. This is only the case if the initial preamble RACH1 has happened to properly fall within, i.e. coincide, with a RACH search window sw (Fig. 3a) employed by the base station 110 to detect RACH accesses from terminals. Only after a proper receipt of the RACH preamble RACH1, the base station 110 returns an answer RAR to the terminal. Insofar, the base station 110 operates according to the LTE standard.

If no successful response to said initial RACH preamble RACH1 is received by the transceiver equipment 10 from the base station 110 within a predetermined waiting interval, the terminal 10 determines a further timing advance value within step 240 (Figure 4) which is to be used for a further RACH preamble RACH2 being sent in step 200. Said further RACH preamble RACH2 also comprises a further sequence. The successive RACH preambles each comprise a different sequence number in order for the transceiver equipment 10 to be able to identify upon which RACH preamble the base station 110 has eventually sent an acknowledgement.

According to a particularly preferred embodiment, said further timing advance value for the further preamble RACH2 is different from said initial timing advance value of said initial preamble RACH1 thus increasing a probability for a successful RACH access to the base station 110.

The steps 200, 210, 220, 240 may be repeated until a successful response RAR to one of said further RACH preambles RACH2, RACH3, .. is received by the transceiver equipment 10 from the base station 110, cf. the arrow RAR of Figure 2. After that, the RACH procedure is finished and further communication procedures may be performed, cf. step 230. For instance, in step 230, the terminal 10 may adjust a previously used timing advance value which has lead to the successful RAR response. The adjustment may be performed depending on timing advance commands received from said base station 110 and ensure a precise timing alignment of terminal 10 for future uplink transmissions to the base station 110.

Figure 3b shows the reception of RACH preamble at a base station 110 according to an embodiment. According to the present embodiment, the size of the RACH window sw is reduced compared to the size which would be needed to capture all incoming RACH preamble regardless of the position of the emitting transceivers compared to the base station 110.

Consequently, even if a cell radius size of 100 km or more is available, the RACH search window size would be dimensioned as if the cell size would be much lower, for example 15 km cell radius size. In this case, only RACH preambles sent by transceiver station located within a distance of 15 km around the base station would be correctly received in the search window of reduced size. This implies that frequently RACH preambles of transceiver equipments located far from the base station (for example located 15 km to 100 km away from the base station) would fall outside of the RACH search window and consequently will not be detected by the base station.

According to the present invention, this situation is solved by the fact that RACH preambles RACH1, RACH2, .. are issued by the transceiver terminal 10 with different timing advance values increasing the chance to match even a comparatively small RACH search window. For instance, the third RACH preamble comprising sequence 3 depicted by Figure 3b is successful, while the preceding two preambles with sequences 1, 2 have not been successful due to their different timing advance values.

In other words, the timing advance value that has been chosen according to the inventive principle for RACH preamble with sequence 3, is successful since it effects a proper match with the search window sw.

It will be clear for the ones skilled in the art, that the method steps depicted by Figure 4 can be applied iteratively until the base station 110 acknowledges the RACH preamble as correctly received, wherein various strategies for choosing the initial timing advance value and/or further timing advance values may be adopted.

According to a preferred embodiment, said initial timing advance value of said initial RACH preamble RACH1 (Figure 2) and/or a further timing advance value of at least one further RACH preamble RACH2, RACH3, .. is determined independently of a search window duration of a search window sw used by said base station for detecting said RACH preamble.

According to a preferred embodiment, said initial timing advance value of said initial RACH preamble RACH1 and/or a further timing advance value of at least one further RACH preamble RACH2, RACH3, .. is selected from a predetermined range of possible timing advance values to be used by said transceiver equipment 10. Said range may advantageously comprise timing advance values that correspond with a cell radius r1, r2 (Figure 5) of more than 100 km of a radio cell being served by said base station 110; 110a, 110b, preferably more than 150 km. Thus, large radio cells with an efficient RACH procedure may be implemented by employing the embodiments.

According to a particularly preferred embodiment, said transceiver equipment 10 receives from said base station 110 cell radius information that characterizes at least one of: an actual cell radius r1, r2, a possible maximum cell radius; and wherein said transceiver equipment 10 selects said initial timing advance value of said initial RACH preamble RACH1 and/or a further timing advance value of at least one further RACH preamble RACH2, RACH3, .. depending on said cell radius information, which enables to efficiently determine suitable timing advance values even for non-standard size cells with cell radii exceeding 100 km.

A further improvement of RACH procedure may be achieved by said transceiver equipment 10 choosing a transmit power level for sending said RACH preambles RACH1, RACH2, .. depending on timing advance values associated with said RACH preambles RACH1, RACH2, ...

According to a further preferred embodiment, said transceiver equipment 10 interprets a data value of a timing advance command received from said base station 110, which represents a timing advance value, differently as foreseen is an underlying communications standard the transceiver equipment 10 and the base station 110 adhere to, in order to transform a value range for the timing advance value as comprised within said timing advance command from a first value range as foreseen by said communications standard to a second value range, which is not foreseen by the standard and which is larger than said first value range.

For instance, both the transceiver 10 and the base station 110 may reinterpret the timing advance values, which for the LTE standard may e.g. comprise 11 bit. Reinterpretation may e.g. be accomplished by multiplying the standardized 11 bit value by a predetermined factor, e.g. 2. Thus, the granularity of the timing advance values is reduced. However, the possible maximum values for the timing advance that may be signaled by means of the timing advance commands are increased by the factor of 2. Of course, other factors of further transformations of the timing advance value range may also be performed by the components 10, 110 to be able to accommodate cell radii of several hundred kilometers.

According to a further embodiment, said transforming is performed depending on cell radius information received from said base station 110, wherein said cell radius information characterizes at least one of: an actual cell radius, a possible maximum cell radius. This way, the terminal 10 may use a value range for the timing advance values which is optimized to a respective operating scenario. For instance, the eNodeB 110 broadcasts information on the possible range of the cell radius (e.g. "range 1" defined as a cell radius below 100 km, "range 2" defined as a cell radius between 100 km and 200 km, and "range 3" between 200 km and 300 km). In this case, the issued timing advance commands by the eNodeB 110 may advantageously be interpreted by the terminal 10 according to the specific range of the cell radius, e.g. with the standardized resolution of 0.52 µs for "range 1" (< 100 km), with the resolution of 2 x 0.52 µs for "range 2", and with the resolution of 3 x 0.52 µs for the "range 3". With this embodiment, the fine timing resolution of 0.52 µs as standardized can be retained for the vast majority of cells with radii according to the standard (i.e., cell radius < 100 km), while at the same time enabling to use an extended value range for the timing advance when being in larger cells.

For further illustration, a conventional LTE-standard timing advance command which signals the terminal 10 to set a timing advance (absolute or relative) of 6 µs would be interpreted as having a value of 12 µs for the above explained case of "range 2" with the reinterpretation of data according to the embodiment.

Figure 5 shows an application of the present invention to air to ground communication.

According to the present invention, this method is especially advantageous for air to ground communication systems in which a network of base stations 110a, 110b on the ground communicates with on-board units 10 having the functionality of the inventive transceiver 10 in air planes.

The cells around each base station 110a, 110b are usually large due to the distance to cover. Cell radii r1, r2 may be around 200 km or even more.

However, each cell usually has a very low density of air planes.

In this situation, one or a limited number of on-board units 10 per air plane is / are used as gateway or customer premises equipment (CPE) to further enable communication with user terminals 12 of the users on the plane. These user terminals 12 may be dedicated terminals communicating over WIFI with the on-board unit 10 or communicating with a usual mobile communication standard with the on-board unit 10, the on-board unit 10 converting the LTE signals it got in the wireless communications signal required for communication with the air users.

The base stations 110a, 110b may be equipped with high-gain directive antennas 111a, 111b to further support the large cell radii r1, r2. In some embodiments, the antenna 10a of the OBU 10 may also be a high-gain directive antenna.

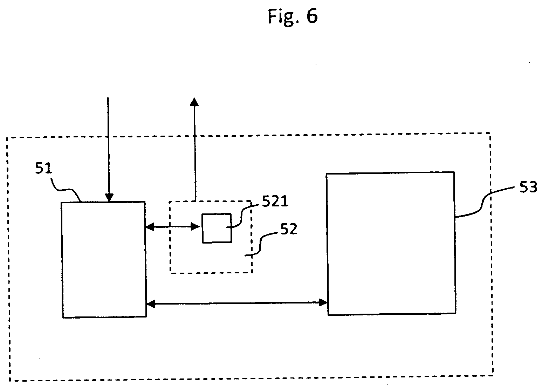

Figure 6 shows an implementation of a transceiver equipment according to the present invention. The transceiver comprises a receiving module 51 adapted to receive radio communication signal according to a radio communication standard as UMTS, GSM or LTE. LTE or any similar high data rate radio communication system is preferred for the large bit rate they can convey.

The transceiver further comprises a transmit module 52 comprising a RACH module 521 responsible for sending RACH preambles for accessing a mobile or wireless radio communication network 100 (Figure 2). The RACH module 521 preferably uses short RACH sequences as for example RACH format 0 with a duration of 903 µs (including cyclic prefix cp) as defined in the LTE standard although the corresponding base station is in the middle of a large cell of up to 100 km or more cell radius which would according to LTE standard require a RACH format 3 with a duration of 2284 µs (including cyclic prefix cp). For larger cell radii over 100 km, according to a further embodiment, other RACH formats may also be used.

The RACH module 521 further comprises means for selecting an initial timing advance value for issuing the first RACH preamble RACH1 as well as means for determining further timing advance values for sending subsequent RACH preambles RACH2, RACH3, ... The timing advance values are preferably determined based on a cell radius r1, r2 that may be signaled by the base station 110 (Figure 2).

The RACH module 521 comprises means for sending a RACH preamble RACH1, RACH2, .. using the initial timing advance value or further timing advance values. The means for sending a RACH preamble further selects a sequence to be included in the RACH preamble preferably randomly selected among a set of predefined sequences as foreseen in LTE standard.

The RACH module 521 further comprises means for checking if an acknowledgement RAR of the RACH preamble has been received from the base station 110 in order to determine if additional RACH preambles have to be sent or if the sending of additional RACH preambles can be stopped.

In a preferred embodiment of the present invention, the RACH module 521 comprises means for generating a train of RACH preambles with different sequence number each and sent with different timing advance values, which may be determined according to the various embodiments explained above. The train of RACH preambles is preferably sent during the same frame.

In a further embodiment of the present invention, the receiving module 51 comprises means for detecting the signal strength of a broadcast signal emitted by a base station 110. The information related to the signal strength is transmitted from the receiving module 51 to the RACH module 521 which evaluates the distance between the transceiver and the base station based on an assumption on the broadcast signal strength as emitted by the base station. Based on the evaluated distance information, an appropriate timing advance value can be selected which increases the probability to have a successful RACH procedure at one of the first sent RACH preambles.

It will be understood by those skilled in the art that even if the distance and an appropriate timing advance value are linked, the estimation of the distance is not a mandatory requirement. A direct evaluation of the appropriate timing advance value or of another intermediate parameter related to the timing advance value could be evaluated by the RACH module 521.

In a preferred embodiment, the transceiver is an on-board unit part of a plane und acts as a CPE responsible for aggregating the data flows of a plurality of users on board of a plane (up to 800 passengers for an Airbus A380-type airplane). The users on board communicating are preferably using a wireless communication scheme as WIFI or GSM or UMTS or any other appropriate wired communication with an on-board communication controller 53. The on board communication controller 53 further comprises a gateway function aggregating/disaggregating on-board data and for converting the on-board used communication scheme to the air-to-ground communication scheme and vice versa.

Either one or a limited number of such on-board units 10 would be available per airplane.

It will be understood that not only planes could carry an on-board unit implementing the features of a transceiver 10 but any other vehicle gathering several terminals 12 on-board could be adapted to carry an on-board unit according to the present invention.

Alternatively, it will however be understood by those skilled in the art that the described transceiver could also be a simple user equipment.

In a further advantageous embodiment of the present invention, a starting value for an initial timing advance value can be evaluated by the transceiver station 10 based on broadcast signal it receives from the base station 110. Measuring the strength of the received signal and making an assumption on the signal strength transmitted by the base station 110 would be a first indication on the distance between the transceiver equipment and the base station. The first RACH preamble could then be transmitted using a timing advance compatible with the estimation of the distance between the base station 110 and the transceiver station 10.

This contributes also to lead to a quicker success of the RACH procedure.

In another embodiment, an indication for an initial timing advance value can be contained in a handover message received at the transceiver station 10 upon handover request from the network 100. Since the network 100 already performs measurements on signal strength to make the handover decision, some of these measurements may be used to derive a distance between the next base station serving the transceiver equipment as well as an appropriate timing advance value to take this distance into account. In some radio communication systems, vendor-specific fields are foreseen in the handover message. It would be advantageous to use one of the vendor-specific fields to convey an indication related to the initial timing advance to the transceiver equipment.

The present invention is particularly advantageous since it enables to allow coverage especially in sea areas in which propagation distances greater than the standardized 100 km occur based on a modification of standard LTE technology.

By applying the inventive principle, both efficient RACH procedures and following data transmissions with a base station 110 can be guaranteed even for radio cells having a radius exceeding 100 km.

## Claims

1. Method for accessing a wireless communications network (100) adhering to the Long Term Evolution, LTE, standard by a transceiver equipment (10), said transceiver equipment (10) sending a Random Access Channel, RACH, preamble over a Random Access Channel to a base station (110), said method comprising the steps of: Sending (200) from said transceiver equipment (10) to said base station (110) an initial RACH preamble (RACH1) using an initial timing advance value selected by the transceiver equipment, wherein said initial RACH preamble (RACH1) comprises a first sequence; determining (220) if a successful response (RAR) to said initial RACH preamble (RACH1) is received by the transceiver equipment (10) from the base station (110) within a predetermined waiting interval, if no successful response to said initial RACH preamble (RACH1) is received by the transceiver equipment (10) from the base station (110) within a predetermined waiting interval, sending (200) from said transceiver equipment (10) to said base station (110) at least one further RACH preamble (RACH2, RACH3, ..) using a further timing advance value selected by the transceiver equipment, wherein said step of sending at least one further RACH preamble (RACH2, RACH3, ..) comprises sending each of said at least one further preamble (RACH2, RACH3, ...) comprising a further sequence, until a successful response (RAR) to one of said further RACH preambles (RACH2, RACH3, ..) is received by the transceiver equipment (10) from the base station (110), wherein said initial timing advance value has a nonzero value and said further timing advance value is different from said initial timing advance value.

2. Method according to claim 1, wherein said initial timing advance value of said initial RACH preamble (RACH1) and/or a further timing advance value of at least one further RACH preamble (RACH2, RACH3, ..) is determined independently of a search window duration of a search window used by said base station (110) for detecting said RACH preamble.

3. Method according to one of the preceding claims, wherein said initial timing advance value of said initial RACH preamble (RACH1) and/or a further timing advance value of at least one further RACH preamble (RACH2, RACH3, ..) is selected from a predetermined range of possible timing advance values to be used by said transceiver equipment (10) .

4. Method according to claim 3, wherein said range comprises timing advance values that correspond with a cell radius (r1, r2) of more than 100 km of a radio cell being served by said base station (110; 110a, 110b).

5. Method according to one of the preceding claims, wherein said transceiver equipment (10) receives from said base station (110) cell radius information that characterizes at least one of: an actual cell radius (r1, r2), a possible maximum cell radius; and wherein said transceiver equipment (10) selects said initial timing advance value of said initial RACH preamble (RACH1) and/or a further timing advance value of at least one further RACH preamble (RACH2, RACH3, ..) depending on said cell radius information.

6. Method according to one of the preceding claims, wherein said transceiver equipment (10) chooses a transmit power level for sending said RACH preambles (RACH1, RACH2, ..) depending on timing advance values associated with said RACH preambles (RACH1, RACH2, ..).

7. Method according to claim 1, said method being adapted to be used for air to ground communications wherein said transceiver equipment (10) is an onboard unit on board of an air plane and said base station (110a, 110b) is a ground unit.

8. Method according to one of the preceding claims, wherein said transceiver equipment (10) simultaneously sends a plurality of initial RACH preambles (RACH1) to said base station (110), wherein each of said plurality of initial RACH preambles (RACH1) is associated with a different sequence and a different initial timing advance value.

9. Transceiver equipment (10) configured to access a wireless communications network (100) adhering to the Long Term Evolution, LTE, standard, said transceiver equipment (10) comprising: means for sending a Random Access Channel, RACH, preamble over a Random Access Channel to a base station (110), means for, sending (200) from said transceiver equipment (10) to said base station (110) an initial RACH preamble (RACH1) using an initial timing advance value selected by the transceiver equipment, wherein said initial RACH preamble (RACH1) comprises a first sequence; means for determining (220) if a successful response (RAR) to said initial RACH preamble (RACH1) is received by the transceiver equipment (10) from the base station (110) within a predetermined waiting interval, means for, if no successful response to said initial RACH preamble (RACH1) is received by the transceiver equipment (10) from the base station (110) within a predetermined waiting interval, sending (200) from said transceiver equipment (10) to said base station (110) at least one further RACH preamble (RACH2, RACH3, ..) using a further timing advance value selected by the transceiver equipment, wherein said means for sending (200) at least one further RACH preamble (RACH2, RACH3, ..) is configured to send each of said at least one further preamble (RACH2, RACH3, ...) comprising a further sequence, until a successful response (RAR) to one of said further RACH preambles (RACH2, RACH3, ..) is received by the transceiver equipment (10) from the base station (110), wherein said initial timing advance value has a nonzero value and said further timing advance value is different from said initial timing advance value.

## Patentansprüche

1. Verfahren für den Zugriff auf ein drahtloses Kommunikationsnetz (100), das am Long Term Evolution-, LTE-Standard festhält, durch ein Transceiver-Gerät (10), wobei besagtes Transceiver-Gerät (10) eine Präambel eines Direktzugriffskanals, RACH, über einen Direktzugriffskanal an eine Basisstation (110) sendet, wobei das Verfahren folgende Schritte umfasst: Senden (200), vom besagten Transceiver-Gerät (10) an besagte Basisstation (110), einer anfänglichen RACH-Präambel (RACH1) unter Verwendung eines anfänglichen Vorhaltezeitwertes, der vom Transceiver-Gerät ausgewählt wird, wobei besagte anfängliche RACH-Präambel (RACH1) eine erste Sequenz umfasst; Bestimmen (220), ob eine erfolgreiche Antwort (RAR) auf besagte anfängliche RACH-Präambel (RACH1) durch das Transceiver-Gerät (10) von der Basisstation (110) innerhalb eines vorausbestimmten Warteintervalls empfangen wird, wenn keine erfolgreiche Antwort auf besagte anfängliche RACH-Präambel (RACH1) durch das Transceiver-Gerät (10) von der Basisstation (110) innerhalb eines vorausbestimmten Warteintervalls empfangen wird, Senden (200), vom besagten Transceiver-Gerät (10) an besagte Basisstation (110), von mindestens einer weiteren RACH-Präambel (RACH2, RACH3, ...) unter Verwendung eines weiteren Vorhaltezeitwertes, der vom Transceiver-Gerät ausgewählt wird, wobei besagter Schritt des Sendens von mindestens einer weiteren RACH-Präambel (RACH2, RACH3, ...) das Senden von jeder der besagten mindestens einen weiteren Präambel (RACH2, RACH3, ...), umfassend eine weitere Sequenz, umfasst, bis eine erfolgreiche Antwort (RAR) auf eine der besagten weiteren RACH-Präambeln (RACH2, RACH3, ...) durch das Transceiver-Gerät (10) von der Basisstation (110) empfangen wird, wobei besagter anfänglicher Vorhaltezeitwert einen Nichtnullwert aufweist und besagter weiterer Vorhaltezeitwert vom besagten anfänglichen Vorhaltezeitwert verschieden ist.

2. Verfahren nach Anspruch 1, wobei besagter anfänglicher Vorhaltezeitwert der besagten anfänglichen RACH-Präambel (RACH1) und/oder ein weiterer Vorhaltezeitwert von mindestens einer weiteren RACH-Präambel (RACH2, RACH3, ...) unabhängig von einer Suchfensterdauer eines Suchfensters bestimmt werden, das von der besagten Basisstation (110) zum Erkennen der besagten RACH-Präambel verwendet wird.

3. Verfahren nach einem der vorstehenden Ansprüche, wobei besagter anfänglicher Vorhaltezeitwert der besagten anfänglichen RACH-Präambel (RACH1) und/oder ein weiterer Vorhaltezeitwert von mindestens einer weiteren RACH-Präambel (RACH2, RACH3, ...) ausgewählt werden aus einem vorausbestimmten Bereich möglicher Vorhaltezeitwerte, die vom besagten Transceiver-Gerät (10) zu verwenden sind.

4. Verfahren nach Anspruch 3, wobei besagter Bereich Vorhaltezeitwerte umfasst, die mit einem Zellenradius (r1, r2) von mehr als 100 km einer Funkzelle übereinstimmen, die von der besagten Basisstation (110; 110a, 110b) bedient wird.

5. Verfahren nach einem der vorstehenden Ansprüche, wobei besagtes Transceiver-Gerät (10) von besagter Basisstation (110) Zellenradiusinformationen empfängt, die mindestens eines aus Folgendem kennzeichnen: einen aktuellen Zellenradius (r1, r2), einen möglichen maximalen Zellenradius; und wobei besagtes Transceiver-Gerät (10) den besagten anfänglichen Vorhaltezeitwert der besagten anfänglichen RACH-Präambel (RACH1) und/oder einen weiteren Vorhaltezeitwert von mindestens einer weiteren RACH-Präambel (RACH2, RACH3, ...) auswählt, je nach den besagten Zellenradiusinformationen.

6. Verfahren nach einem der vorstehenden Ansprüche, wobei besagtes Transceiver-Gerät (10) eine Sendeleistungsstufe zum Senden der besagten RACH-Präambeln (RACH1, RACH2, ...) wählt, je nach Vorhaltezeitwerten, die den besagten RACH-Präambeln (RACH1, RACH2, ...) zugeordnet sind.

7. Verfahren nach Anspruch 1, wobei besagtes Verfahren angepasst ist, um für Luft-Boden-Kommunikationen verwendet zu werden, wobei besagtes Transceiver-Gerät (10) eine Bordeinheit an Bord eines Flugzeugs ist und besagte Basisstation (110a, 110b) eine Bodeneinheit ist.

8. Verfahren nach einem der vorstehenden Ansprüche, wobei besagtes Transceiver-Gerät (10) gleichzeitig eine Vielzahl von anfänglichen RACH-Präambeln (RACH1) an besagte Basisstation (110) sendet, wobei jede der besagten Vielzahl von anfänglichen RACH-Präambeln (RACH1) einer anderen Sequenz und einem anderen anfänglichen Vorhaltezeitwert zugeordnet ist.

9. Transceiver-Gerät (10), das ausgelegt ist für den Zugriff auf ein drahtloses Kommunikationsnetz (100), das am Long Term Evolution-, LTE-Standard festhält, wobei besagtes Transceiver-Gerät (10) Folgendes umfasst: Mittel zum Senden einer Präambel eines Direktzugriffskanals, RACH, über einen Direktzugriffskanal an eine Basisstation (110), Mittel zum Senden (200), vom besagten Transceiver-Gerät (10) an besagte Basisstation (110), einer anfänglichen RACH-Präambel (RACH1) unter Verwendung eines anfänglichen Vorhaltezeitwertes, der vom Transceiver-Gerät ausgewählt wird, wobei besagte anfängliche RACH-Präambel (RACH1) eine erste Sequenz umfasst; Mittel zum Bestimmen (220), ob eine erfolgreiche Antwort (RAR) auf besagte anfängliche RACH-Präambel (RACH1) durch das Transceiver-Gerät (10) von der Basisstation (110) innerhalb eines vorausbestimmten Warteintervalls empfangen wird, wenn keine erfolgreiche Antwort auf besagte anfängliche RACH-Präambel (RACH1) durch das Transceiver-Gerät (10) von der Basisstation (110) innerhalb eines vorausbestimmten Warteintervalls empfangen wird, Mittel zum Senden (200), vom besagten Transceiver-Gerät (10) an besagte Basisstation (110), von mindestens einer weiteren RACH-Präambel (RACH2, RACH3, ...) unter Verwendung eines weiteren Vorhaltezeitwertes, der vom Transceiver-Gerät ausgewählt wird, wobei besagtes Mittel zum Senden (200) von mindestens einer weiteren RACH-Präambel (RACH2, RACH3, ...) ausgelegt ist zum Senden von jeder der besagten mindestens einen weiteren Präambel (RACH2, RACH3, ...), umfassend eine weitere Sequenz, bis eine erfolgreiche Antwort (RAR) auf eine der besagten weiteren RACH-Präambeln (RACH2, RACH3, ...) durch das Transceiver-Gerät (10) von der Basisstation (110) empfangen wird, wobei besagter anfänglicher Vorhaltezeitwert einen Nichtnullwert aufweist und besagter weiterer Vorhaltezeitwert vom besagten anfänglichen Vorhaltezeitwert verschieden ist.

## Revendications

1. Procédé d'accès à un réseau de communication sans fil (100) adhérant à la norme d'évolution à long terme, LTE, par un équipement émetteur-récepteur (10), ledit équipement émetteur-récepteur (10) envoyant un préambule de canal d'accès aléatoire, RACH, sur un canal d'accès aléatoire à une station de base (110), ledit procédé comprenant les étapes suivantes : envoyer (200), dudit équipement émetteur-récepteur (10) à ladite station de base (110), un préambule RACH initial (RACH1) en utilisant une valeur d'avance de base de temps initiale sélectionnée par l'équipement émetteur-récepteur, ledit préambule RACH initial (RACH1) comprenant une première séquence ; déterminer (220) si une réponse positive (RAR) audit préambule RACH initial (RACH1) est reçue par l'équipement émetteur-récepteur (10) de la part de la station de base (110) au sein d'un intervalle d'attente prédéterminé, si aucune réponse positive audit préambule RACH initial (RACH1) n'est reçue par l'équipement émetteur-récepteur (10) de la part de la station de base (110) au sein d'un intervalle d'attente prédéterminé, envoyer (200) dudit équipement émetteur-récepteur (10) à ladite station de base (110) au moins un préambule RACH supplémentaire (RACH2, RACH3, ...) en utilisant une valeur d'avance de base de temps supplémentaire sélectionnée par l'équipement émetteur-récepteur, ladite étape d'envoyer au moins un préambule RACH supplémentaire (RACH2, RACH3, ...) comprenant envoyer chacun desdits au moins un préambule RACH supplémentaire (RACH2, RACH3, ...) contenant une séquence supplémentaire jusqu'à ce qu'une réponse positive (RAR) à l'un desdits préambules RACH supplémentaires (RACH2, RACH3, ...) soit reçue par l'équipement émetteur-récepteur (10) de la part de la station de base (110), ladite valeur d'avance de base de temps initiale possédant une valeur non nulle et ladite valeur d'avance de base de temps supplémentaire étant différente de ladite valeur d'avance de base de temps initiale.

2. Procédé selon la revendication 1, selon lequel ladite valeur d'avance de base de temps initiale dudit préambule RACH initial (RACH1) et/ou une valeur d'avance de base de temps supplémentaire d'au moins un préambule RACH supplémentaire (RACH2, RACH3, ...) est déterminée indépendamment d'une durée de fenêtre de recherche d'une fenêtre de recherche utilisée par ladite station de base (110) pour détecter ledit préambule RACH.

3. Procédé selon l'une des revendications précédentes, selon lequel ladite valeur d'avance de base de temps initiale dudit préambule RACH initial (RACH1) et/ou une valeur d'avance de base de temps supplémentaire d'au moins un préambule RACH supplémentaire (RACH2, RACH3, ...) est sélectionnée parmi une plage prédéterminée de valeurs d'avance de base de temps possibles à utiliser par ledit équipement émetteur-récepteur (10).

4. Procédé selon la revendication 3, selon lequel ladite plage comprend les valeurs d'avance de base de temps qui correspondent à un rayon de cellule (r1, r2) de plus de 100 km d'une cellule radioélectrique qui est desservie par ladite station de base (110 ; 110a, 110b).

5. Procédé selon l'une des revendications précédentes, selon lequel ledit équipement émetteur-récepteur (10) reçoit de la part de ladite station de base (110) des informations de rayon de cellule qui caractérisent au moins un élément parmi les suivants : un rayon de cellule (r1, r2) réel, un rayon de cellule maximum possible ; et selon lequel ledit équipement émetteur-récepteur (10) sélectionne ladite valeur d'avance de base de temps initiale dudit préambule RACH initial (RACH1) et/ou une valeur d'avance de base de temps supplémentaire d'au moins un préambule RACH supplémentaire (RACH2, RACH3, ...) en fonction desdites informations de rayon de cellule.

6. Procédé selon l'une des revendications précédentes, selon lequel ledit équipement émetteur-récepteur (10) choisit un niveau de puissance d'émission pour envoyer lesdits préambules RACH (RACH1, RACH2, ...) en fonction des valeurs d'avance de base de temps associées auxdits préambules RACH (RACH1, RACH2, ...).

7. Procédé selon la revendication 1, ledit procédé étant adapté pour être utilisé pour les communications air-sol, procédé selon lequel ledit équipement émetteur-récepteur (10) est une unité embarquée à bord d'un aéronef et ladite station de base (110a, 110b) est une unité au sol.

8. Procédé selon l'une des revendications précédentes, selon lequel ledit équipement émetteur-récepteur (10) envoie simultanément une pluralité de préambules RACH initiaux (RACH1) à ladite station de base (110), selon lequel chacun de ladite pluralité de préambules RACH initiaux (RACH1) est associé à une séquence différente et à une valeur d'avance de base de temps initiale différente.

9. Équipement émetteur-récepteur (10) configuré pour accéder à un réseau de communication sans fil (100) adhérant à la norme d'évolution à long terme, LTE, par un équipement émetteur-récepteur (10) comprenant : des moyens pour envoyer un préambule de canal d'accès aléatoire, RACH, sur un canal d'accès aléatoire à une station de base (110), des moyens pour envoyer (200), dudit équipement émetteur-récepteur (10) à ladite station de base (110), un préambule RACH initial (RACH1) en utilisant une valeur d'avance de base de temps initiale sélectionnée par l'équipement émetteur-récepteur, ledit préambule RACH initial (RACH1) comprenant une première séquence ; des moyens pour déterminer (220) si une réponse positive (RAR) audit préambule RACH initial (RACH1) est reçue par l'équipement émetteur-récepteur (10) de la part de la station de base (110) au sein d'un intervalle d'attente prédéterminé, des moyens pour, si aucune réponse positive audit préambule RACH initial (RACH1) n'est reçue par l'équipement émetteur-récepteur (10) de la part de la station de base (110) au sein d'un intervalle d'attente prédéterminé, envoyer (200) dudit équipement émetteur-récepteur (10) à ladite station de base (110) au moins un préambule RACH supplémentaire (RACH2, RACH3, ...) en utilisant une valeur d'avance de base de temps supplémentaire sélectionnée par l'équipement émetteur-récepteur, lesdits moyens pour envoyer (200) au moins un préambule RACH supplémentaire (RACH2, RACH3, ...) étant configurés pour envoyer chacun desdits au moins un préambule RACH supplémentaire (RACH2, RACH3, ...) contenant une séquence supplémentaire jusqu'à ce qu'une réponse positive (RAR) à l'un desdits préambules RACH supplémentaires (RACH2, RACH3, ...) soit reçue par l'équipement émetteur-récepteur (10) de la part de la station de base (110), ladite valeur d'avance de base de temps initiale possédant une valeur non nulle et ladite valeur d'avance de base de temps supplémentaire étant différente de ladite valeur d'avance de base de temps initiale.
